# EUROPEAN PATENT SPECIFICATION

(11) **EP 2 031 796 B1**
(45) Date of publication and mention of the grant of the patent: **19.10.2011**
(21) Application number: 07115344.9
(22) Date of filing: 30.08.2007
(51) Int. Cl.: H04L 12/18

(54) **Method and apparatus for multicast tree allocation**
Verfahren und Vorrichtung zur Multicast-Baumzuweisung
Procédé et appareil pour l'attribution d'une arborescence de multidiffusion

(43) Date of publication of application: 04.03.2009
(73) Proprietor: NTT DoCoMo, Inc., Tokyo (JP)
(72) Inventor: Neto, Augusto, 3030-049, Coimbra (PT); Curado, Marilia, 3040-688, Coimbra (PT); Monteiro, Edmundo, 3040-688, Coimbra (PT); Mendes, Paulo, 81673, Munich (DE)
(74) Representative: Betten & Resch

(56) References cited:
- EP-A- 1 814 269
- LAO ET AL: "Tackling group-to-tree matching in large scale group communications" COMPUTER NETWORKS, ELSEVIER SCIENCE PUBLISHERS B.V., AMSTERDAM, NL, vol. 51, no. 11, 23 May 2007 (2007-05-23), pages 3069-3089, XP022094097 ISSN: 1389-1286
- SONG GUO ET AL: "A Distributed Minimum Energy Multicast Algorithm in MANETs" WORLD OF WIRELESS, MOBILE AND MULTIMEDIA NETWORKS, 2006. WOWMOM 2006. INTERNATIONAL SYMPOSIUM ON A BUFFALO-NIAGARA FALLS, NY, USA 26-29 JUNE 2006, PISCATAWAY, NJ, USA,IEEE, 26 June 2006 (2006-06-26), pages 134-142, XP010925858 ISBN: 0-7695-2593-8

## Description

### FIELD OF THE INVENTION

The present invention relates to a method for multicast tree allocation in a network..

### BACKGROUND OF THE INVENTION

Next generation networks are expected to simultaneously distribute the session content to multiple users, independent of the connectivity control schemes supported inside or between the networks along the distribution path. The multi-user sessions (e.g., IPTV, radio, file distribution and push media), will be available anywhere and anytime for users attached to networks with different access technologies. The accommodation of a high number of simultaneous multi-user sessions and the assurance of their continuity along their entire lifetime without jeopardising the system scalability requires efficient network provision.. With this in mind, the control scheme must be chosen taking into account the current network capability. For instance, per-flow approaches which operate on-demand for configurations may jeopardise the network performance through signalling and state overhead

From the transport point of view, multicast is the most suitable technology for group communication, since it allows several users to get the content of the subscribed sessions at the same time without packet duplication, which optimises the utilisation of the network bandwidth.. From the routing point of view, the session path must be computed from the source to the receivers, since the best routes are computed in this direction. However, the multicast resources are controlled in the opposite direction (i.e., from the receiver to the sources), which jeopardizes, for instance, the creation of Quality of Service (QoS) aware multicast trees, once the QoS path is computed in the opposite direction of the multicast processing. This way, asymmetric routes may influence the creation of the multicast tree in a path different than the QoS path. Another drawback of multicast is its per-flow (per tree) basis, which affects negatively the system performance in terms of state storage. For example, the performance of packet forwarding processing is overloaded with the increasing number of active multicast trees, overloading the look-up operations for packet replication.. Therefore, the multicast resources must be efficiently provisioned to ensure the distribution of all session-flows to the member users without damage the system performance..

Dynamic multicast provisioning fits better in high used networks than static provisioning, since the resources are configured on-demand and automatically. For instance, this approach avoids constant human interventions to implement the required configurations and updates. However, the network performance may be negatively affected in terms of bandwidth consumption, since signalling messages are required to inform the agents along the path about the resources which need configuration.

Once the distribution trees are assigned per-flow, they must be over-provisioned carefully so they don't jeopardise the system scalability in terms of state storage (e..g., overloading the forwarding nodes).

The state storage may be optimised by implementing aggregation, which allocates into a single distribution tree the sessions which match some condition, such as when sharing the same segment to distribute packets.. With this in mind, two main nodes manage the connectivity between the incoming flows and the aggregation trees, the aggregator and the deaggregator, which are generally placed at the root and leaf nodes respectively. Therefore, the forwarding nodes only store state regarding aggregation trees, instead of per-flow distribution trees.. For example, the packet forwarding processing is optimised by significantly decreasing the number of options in the look-up operations for packet replication in multicast aware networks.

Most solutions proposed by the research community that optimise signalling and state overhead through over-provisioning, are centred in QoS resources, such as by implementing bandwidth over-reservation. Available solutions which support the over-provisioning of multicast trees create surplus multicast resources aiming to protect against link breaks, node failures and member group leaves.. The solutions presented e.g. in T. Braun, V. Arya, and T. Turletti, "A Backup Tree Algorithm for Multicast Overlay Networks", Networking 2005, Waterloo, Canada, May 2005. and M. Kodialem and T. Lakshman, "Dynamic routing of bandwidth guaranteed multicasts with failure backup", IEEE INFOCOM, New York, USA, Jun, 2002, build a primary and a backup tree to each request (i.e., in a per-flow basis), taking into account resource availability. The configuration of the resources in the new path is fast since the backup tree is created in advance, and moreover the quality of the section may not be damaged. However, these approaches jeopardise the system scalability since they control the creation of the multicast trees in a per-flow basis. Therefore, whereas the system robustness is enhanced, the system scalability is seriously affected once the amount of multicast state is twice the number of active flows.

The solution presented in A. Striegel and G. Manimaran, "DSMCast: a scalable approach for DiffServ multicasting", Computer Networks, vol. 44, New York, NY, USA, Apr. 2004, proposes an application layer multicast in DiffServ domains, where stateless core routers forward the data packets based on extra headers. The information filled in the extra headers caries identification for core nodes, appropriate branching information, tunnelling bit to bypass DiffServ-non-capable nodes, and adaptive DiffServ field to adapt to the heterogeneous DSCP requirements by the different receivers. However, this solution is based on unicast connections to distribute session packets, not supporting thus IP multicast.

The solution presented in J. Cui et al, "Aggregated Multicast - A Comparative Study", Cluster Computing, vol. 8, Hingham, MA, USA, Jan.2005 proposes a novel scheme to improve multicast state scalability. In this scheme, multiple multicast groups are forced to share one distribution tree, called aggregated tree, significantly reducing the number of trees in the network. Consequently the forwarding state is also reduced since the core routers only need to keep state per aggregated tree instead of per group. The solution considers perfect, leaky and incomplete matches of multicast trees. This way, although reducing the multicast state overhead, this approach do not ensure waste of bandwidth avoidance, once leaky and incomplete matches enable delivering multicast data to non-group-member nodes. In addition, the solution may endanger the network performance in terms of signalling overhead, where the network must be signalled to set-up state in appropriate routers on demand.

LAO ET AL: "Tackling group-to-tree matching in large scale group communications" COMPUTER NETWORKS; ELSEVIER SCIENCE PUBLISHERS B.V., AMSTERDAM, NL, vol. 51, no. 11, 23 May 2007 (2007-05-23), pages 3069-3089, XP022094097 ISSN: 1389-1286 discloses mechanism to performing efficient group-to-tree matching in two cases, first a static case where groups do not change, and secondly a dynamic case where members of a group may join or leave. In the first case an initial tree set is created and algorithms for matching groups to the trees are presented. In the second case the dynamic modifications are dealt with by shrinking or extending existing trees.

SONG GUO ET AL: "A Distributed Minimum Energy Multicast Algorithm in MANETs" WORLD OF WIRELESS, MOBILE AND MUTIMEDIA NETWORKS, 2006. WOWMOM 2006. INTERNATIONAL SYMPOSIUM ON A BUFFALO-NIAGARA FALLS, NY, USA 26-29 JUNE 2006, PISCATAWAY, NJ, USA, IEEE, 26 June 2006 (2006-06-26), pages 134-142, XP010925858 ISBN: 0-7695-2593-8 considers the problem of minimizing the energy consumptions of a given multicast connection in mobile ad hoc networks (MANETs) that use omnidirectional antennas and have limited energy resources. Unlike most multicast algorithms that use centralized greedy algorithms to achieve energy-efficiency in static ad hoc networks, our distributed algorithms explore the localized operations to take the advantage of power saving offered by the wireless multicast advantage property in mobile networks. The extensive simulation results have shown that our DMEM (Distributed Minimum Energy Multicast) algorithm is very efficient in terms of energy saving under different node motilities.

### SUMMARY OF THE INVENTION

The present invention is defined in the independent claims. The dependent claims define embodiments of the invention.

According to one embodiment there is provided method for multicast tree allocation in a network, said method comprising:
creating during an initialisation phase a plurality of possible multicast distribution trees, wherein said plurality of possible multicast distribution trees is created such that for each of a plurality of combinations of egress nodes and a given ingress node there has been created a corresponding distribution tree;
switching of distribution trees by switching to another distribution tree selected from the distribution trees which have been generated during said initialisation phase, wherein said switching is performed in response to an egress node joining or leaving a session.

The creation of multiple multicast distribution trees during an initialisation phase, in other words "in advance", leads to an overprovisioning of connectivity resources which can be used for implementing an efficient adaptation mechanism which can adapt to changing circumstances without much signalling being required for providing the necessary connectivity resources.. In this way the mechanism can adapt to changes in the set of egress nodes which participate in the session to achieve an optimum distribution path in any situation.

According to one embodiment all possible multicast distribution trees are generated during the initialisation phase. This means that for each combination (or for each "realistic" combination) of egress nodes and a given ingress node there is a corresponding multicast distribution tree which has been generated and which can be used to switch between the trees in order to adapt to a change in the set of egress nodes, e.g. by a node joining or leaving a session.
The term "all possible" distribution trees therefore should be understood such that it not necessarily encompasses all theoretically possible distribution trees (although this may be possible as well) but such that from this reservoir of "all theoretically possible distribution trees" only those which may from a practical point be chosen are included. This may e.g. exclude some distribution trees for efficiency reasons, e.g. trees where an ingress node or an edge node would form an intermediate node of the tree.

The creation of multicast distribution trees during initialisation therefore leads to a "reservoir" of distribution trees or a "overprovisioning" of multiple multicast distribution trees which have different combinations of egress nodes for a given ingress node and from which the most suitable one may be chosen and between which a switching can be performed depending on the circumstances, like depending on the egress nodes participating in a session.

According to one embodiment said multicast trees comprise multicast aggregation trees in which multiple multicast groups are sharing one distribution tree..

This enables the usage of "ramified" trees of aggregation trees in which multiple multicast groups are sharing one distribution tree.

According to one embodiment the method comprises:
controlling the session connectivity by selecting a suitable aggregation tree such that the selected aggregation tree has no empty leave nodes formed by an egress node not participating in the session, and further such that there is a leave node in the selected aggregation tree for each node participating in the session.

This enables the selection of an aggregation tree which uses the available resources in an optimum manner.

According to one embodiment said generation of distribution trees further comprises the filtering of the paths, wherein said filtering comprises the selection of the best paths or the discarding of inefficient paths.

This increases the efficiency of the mechanism.

According to one embodiment said filtering comprises: discarding paths in which ingress routers are within the forwarding nodes, and/or discarding the paths with a branching point in the ingress routers.

This avoids particularly inefficient paths.

According to one embodiment the method comprises:
creating during an initialisation phase all possible distribution trees such that if a session requires a certain distribution path from an ingress node or a source node to one or more egress nodes, the corresponding distribution path has already been created during said initialisation phase.

The creation of a reservoir of distribution paths in advance during an initialisation phase makes it possible later during usage of a session to select the most suitable distribution path from this reservoir without large signalling overhead or loss of time due to processing..

According to one embodiment each distribution tree which has been created is identified by a multicast tuple composed by the source IP address being the address of the ingress router which is the enter point of the session-flows and a destination IP address, being an IP multicast address..

This enables the usage of the created trees or paths in a multicast aware environment..

According to one embodiment the method comprises discovering the available distribution paths within the network and creating the un-ramified aggregation trees..

The (unramified) aggregation trees allow efficient usage of resources.

According to one embodiment the method comprises: flooding the network during initialisation by the ingress nodes of said network with a TREE message, and upon receiving the TREE message, a router which has received said TREE message propagates the message on each outgoing interface except the one in which the message was received, wherein each message carries the local IP address, filled in the distribution path list, of the outgoing interface used for propagation, said method further comprising:
after receiving the TREE message, an egress node composes a RESPONSE message corresponding to the TREE message received and sends it to the ingress router which is source of the equivalent TREE message, said RESPONSE message carrying the distribution path list of the equivalent TREE message and the local outgoing interfaces.

This enables the discovery or creation of the distribution trees.

According to one embodiment said initialisation phase further comprises:
creating the un-ramified multicast aggregation trees, said creation comprising:
   after having allocated a multicast channel to a distribution path, sending a TREE message along the distribution path, wherein each core node adds in the MRIB the IP address of the previous node and propagates the message downstream, said creation further comprising:
      after receiving the TREE message, updating by the egress node the MRIB with the IP address of the previous router and triggering the multicast routing protocol for creating the multicast tree.

In this manner the unramified aggregation trees can be generated.

According to one embodiment said initialisation phase further comprises:
computing and creating the ramified multicast aggregation trees that cover more than one egress node, wherein the ramified trees are computed by combining all un-ramified trees taking into consideration the ingress router and the available egress routers,
allocating a multicast channel to each of the ramified multicast aggregation trees.

In this manner a set of ramified aggregation trees can be generated which can then be used for connectivity control to provide an efficient connectivity control.

According to one embodiment the method comprises: discarding all trees with branching point at the root, and
sending a signalling message to all trees in order to configure the multicast trees.

This enables the efficient generation of the ramified aggregation trees.

According to one embodiment the method comprises:
controlling the session connectivity in order to propagate the one or more session-flows into the generated distribution trees such as to avoid a waste of resources.

In this manner there can be made use of the distribution trees generated in advance in order to achieve a particularly efficient connectivity control with short response time and low signalling overhead.

According to one embodiment there is provided an apparatus for multicast tree multicast tree allocation in a network, said apparatus comprising:
a module for creating during an initialisation phase a plurality of possible multicast distribution trees, wherein said plurality of possible multicast distribution trees is created such that for each of a plurality of combinations of egress nodes and a given ingress node there has been created a corresponding distribution tree;
a module for switching of distribution trees by switching to another distribution tree selected from the distribution trees which have been generated during said initialisation phase, wherein said switching is performed in response to an egress node joining or leaving a session.

According to one embodiment the apparatus further comprises:
a module for performing a method according to one of the embodiments of the invention.

A computer program comprising computer program code which when being executed on a computer enables said computer to carry out a method according to one of the embodiments of the invention.

### DESCRIPTION OF THE DRAWINGS

Fig.. 1 schematically illustrates an environment where an embodiment of the invention may be used.
Fig. 2 schematically illustrates the interfaces of a node according to an embodiment of the invention..
Fig. 3 schematically illustrates a distribution path generation method according to an embodiment of the invention.
Fig. 4 schematically illustrates a distribution path generation method according to a further embodiment of the invention.
Fig. 5 schematically illustrates a distribution path generation method according to a further embodiment of the invention.
Fig. 6 schematically illustrates a state diagram of an embodiment of the invention.
Fig.. 7 schematically illustrates a multicast tree allocation according to an embodiment of the invention..

### DETAILED DESCRIPTION

Before describing embodiments of the invention some terms which will be used in the following description are explained.

Access router - Router linked to the access network in which a receiver belongs to;
AS - Autonomous Systems;
BR - Border Router (ingress or egress);
Downstream - Direction from the ingress node to an egress or access node;
Upstream - Direction from the egress node to an ingress node;
Unicast Routing Information Base - The unicast topology table;
Multicast Routing Information Base - The multicast topology table typically derived from unicast RIB. PIM protocols use the MRIB to decide where to send join/prune messages; Reserved Path - The path in which a Reserve message has controlled resources.

In the following there will be described embodiments of a mechanism to over-provision distribution trees (considered here as connectivity resources).. The mechanism and its embodiments may be referred to in the following as Advanced Aggregation Tree Allocation (AGTree). The AGTree mechanism in one embodiment controls the aggregation of the incoming session-flows and dynamically allocates them into distribution trees which supply all their member users, increasing the system performance significantly reducing signalling and state overhead.

The Advanced Aggregation Tree Allocation (AGTree) is a mechanism for over-provisioning connectivity resources (i.e., distribution trees) and dynamically controlling the allocation of unicast and multicast session-flows into aggregation trees. The AGTree mechanism in one embodiment fills the gap of the signalling overhead resulting from on-demand approaches, by combining over-provisioning of connectivity resources and admission control, where no per-request signalling is performed. The state overhead due to per-flow approach is overcome by implementing aggregations and, combined with a dynamic session connectivity control, avoids waste of resources due to the over-provisioning. Furthermore, the AGTree mechanism avoids problems due to asymmetric routes by indicating the session path in the *Multicast Routing Information Base* (MRIB) during the resource connectivity over-provisioning work..

In the AGTree mechanism, according to one embodiment the distribution trees are over-provisioned in the system bootstrap, in order to prevent system performance degradation in terms of bandwidth consumption (due to signalling) and processing (due to state manipulation) to configure the resources.. Instead of per-flow, the AGTree mechanism creates the distribution trees in advance taking into consideration the number of possible associations which can be established between each root node and the available leaf nodes. In this context, the root nodes are the enter nodes of the sessions (i.e., ingress router) and the leaf nodes are the exit node of the network (i.e., egress router or the access point of the user, denoted as access router).. In unicast domains, each distribution tree (called un-ramified tree) is composed by a pair of root and leaf node and a set of core nodes between them, since no packet duplication is accomplished in the forwarding nodes. On the other hand, in multicast domains, the distribution trees may support several leaf nodes, where the packets are duplicated at routers called branching points (called ramified when supporting branching points).

The AGTree mechanism in one embodiment controls the session connectivity by dynamically allocating the session-flows into aggregation trees. All session-flows which share the same distribution path, independently of the class of service (CoS) in which they are assigned to, are aggregated into the same distribution tree which covers the entire path. Therefore, the AGTree mechanism creates aggregation trees in advance based on the number of ingress-to-egress(s) associations, instead of depending on large and dynamic parameters, such as the number of session/flow requests. The AGTree mechanism in one embodiment is able to allocate unicast and multicast traffic into the same aggregation tree, being perfectly matched when all its leaf nodes have members of the indicated session. In one embodiment, by default the AGTree mechanism allocates the incoming session-flows into the aggregation trees through a tunnel-based approach An embodiment of such an approach will be described in more detail later.

The AGTree mechanism in one embodiment avoids the distribution of session content to leaves of the tree without group members by controlling on demand the allocation of aggregation trees. Whenever the AGTree mechanism receives a request, it locally searches for another aggregation tree that covers the distribution path required by the indicated session and merges it into the matched tree, without affecting the session connectivity. When AGTree receives a request to an active session and realises that the destination is not covered by the current allocated tree, the session is switched to another aggregation tree with leaves for all active members, including the new one. According to one embodiment a similar approach is also implemented when a single user, attached to a leaf of the aggregation tree, leaves the session. This local dynamic switching scheme, combined with creation of aggregation trees in advance, allows fast recovery from failures (e.g., re-routing) in comparison to schemes that require signalling exchanges for rerouting from the source or from some point further away from the failed element.

The AGTree mechanism controls the admission of sessions by checking the local availability of perfectly matched distribution trees. By combining the creation of distribution trees in advance and admission control, the AGTree mechanism decreases the signalling overhead by avoiding on-demand message exchange for configuring the connectivity resources. Moreover, the network performance is increased through traffic aggregation and session connectivity control, where the impact of per-flow multicast state storage in the packet forwarding processing is reduced. According to one embodiment the mechanism comprises the following components or operations:
- Each receiver gets the available sessions from the sender(s) by any off-line or on-line means;
- Each receiver interested in joining a session, requests it to an agent in the network to which it is connected at the session set-up time (denoted access router);
- A protocol or mechanism in the network agent requests connectivity resource (i.e., the allocation of a distribution path) for each session-flow in each domain by indicating the IP address of the access router in which the interested user is attached to;
- An external mechanism is responsible to control the connectivity from the access router to the member users though notifying the multicast channel that must be joined/left. For example, the application in the member user triggers the IGMPv3 (see e.g. B. Cain et al, "Internet Group Management Protocol, Version 3", IETF, RFC 3376, Oct 2002) or MLDv2 (see e..g.. R. Vida and L. Costa, "Multicast Listener Discovery Version 2 (MLDv2) for IPv6", IETF, RFC 2710, Jun 2004). Moreover, this application may trigger the AGTree mechanism in order to inform when a session has no member users in an access router. For instance, the mechanism called SEACON is able to inform when no active member user are available. Such a mechanism called SEACON is described in European Patent application number 07102594.4 titled "Method and apparatus for session aware connectivity control" which was filed by the same applicant as the present one at the EPO on Feb. 16, 2007. For further details of the SEACON mechanism reference is made to this application;
- A range of communication ports, Registered or Dynamic and/or Private (see e.g. E. Kohler, M. Handley and S. Floyd, "Datagram Congestion Control Protocol (DCCP) ", IETF, RFC4340, Mar 2006), should be available and filed in a pool of ports;
- Routers according to one embodiment recognise IP Routing Alert Option [see e.g. RFC2113].

The functionalities supported by the AGTree mechanism in one embodiment are implemented by agents located at the edge and core routers, respectively called AGTree Edge agent (AGTree-E) and AGTree Core agent (AGTree-C). The AGTree-E agents are statefull in order to control the admission of the session-flows and initiate the operations to control the connectivity resources in the entire network. An AGTree-E agent according to one embodiment implements internal and external interfaces, in order to, for instance, interact with other AGTree agents and to communicate with external protocols or mechanism. In contrast, AGTree-C agents according to one embodiment have reduced state, storing per-class ingress IP address and multicast channel (when applicable), supporting only internal interfaces to configure the connectivity resources upon signalled. Thus, the system scalability is achieved by pushing the complex operations to control the resources to the edge nodes, and leaving the core nodes simple..

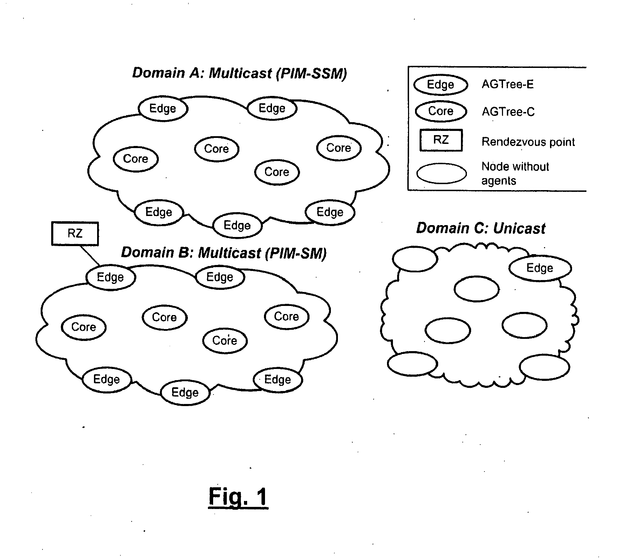

In what concerns the multicast approach supported by an environment, AGTree may interact with central or distributed entities. Figure 1 illustrates a scenario composed by three network clusters, where domains A and B are multicast-aware, implementing PIM-SSM (see e.g. S. Bhattacharyya, "An Overview of Source-Specific Multicast (SSM)", IETF, RFC3569, Jul 2003) and PIM-SM (see e..g.. D. Estrin et al, "Protocol Independent Multicast-Sparse Mode (PIM-SM): Protocol Specification", IETF, RFC2362, Jun 1998) respectively, and C supports unicast. Th e AGTree mechanism in one embodiment operates in a distributed manner to control the connectivity resources, where the multicast routing protocol is triggered at the egress routers to create the multicast trees. On the other hand, domain C is unicast and the distribution trees are maintained by AGTree-E agents at the ingress nodes.

According to one embodiment, in order to implement the functionalities supported by AGTree, the following interfaces (which are schematically illustrated in Fig.. 2)are provided:
- Application Interface: Used by external mechanisms or protocols to trigger the AGTree mechanism with a request, which carries the session object. Moreover, the AGTree mechanism uses this interface to feedback the requester application with the result of the requested operation. For instance, before a session-flow enters the AGTree-aware cluster, an external application uses this interface to request resources (i.e., the distribution path) for the incoming flow. The AGTree mechanism also uses this interface to trigger the requester application in order to confirm the successful accomplishment of the previous request. In addition, the AGTree mechanism can receive indication to re-allocate connectivity resources of ongoing session-flows when new users are interested in the session or due to the movement of the user to another domain;
- Multi-user Control Interface: Used to manage the allocation of unicast and multicast IP addresses and communication ports for allocating the aggregation trees. This interface is also used to create the multicast aggregation trees by configuring the replicators for an assigned outgoing interface (acquired by the Communication Interface). The addition of entries in the MRIB is accomplished through this interface as well as the triggering of the multicast protocol in order to create/maintain multicast trees.. Finally, the AGTree mechanism uses this interface to query for control information, such as to check when a multicast tree is installed or to retrieve a path from the MRIB;
- Communication/routing Interface: Used as support to exchange messages, carrying control information, among AGTree agents as support for the accomplishment of operations. Additionally, the AGTree mechanism identifies the network interface for further processing via this interface, by interacting with the available unicast routing protocol (e.g., OSPF), where the information is retrieved from the Routing Information Base (RIB). The AGTree mechanism in one embodiment is able to detect re-routing events through this interface, for instance, when OSFP is informed by lower-level protocols that a network interface is down (see e..g.. J. Moy, "OSPF Version 2", IETF, RFC2328, Apr 1998).

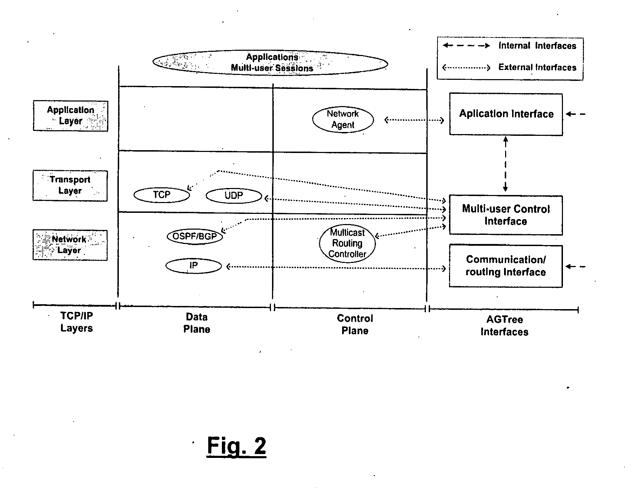

Figure 2 shows the interfaces in accordance with the type of the AGTree agent. The exchange messages, which carry control information between AGTree agents, are implemented through the communication interface.

In the following messages of the AGTree mechanism according to one embodiment are explained.

### AGTree Messages:

- TREE: This message is used by the AGTree-E to discover the available distribution paths and according to one embodiment to request the creation of the aggregation trees in multicast-aware networks.. For the latter, the message according to one embodiment is filled with the multicast channels as supports for their configuration. Message specific flags may control the behaviour of the AGTree agents, indicating for instance whether an operation must not be performed;
- RESPONSE: This message is used to feedback an AGTree-E agent about the requested operation. The message may contain specific control information, such as the set of nodes which compose a distribution path. Whenever a node is informed by the routing protocol that an interface is down, according to one embodiment this message is sent to all ingress nodes locally stored, with a specific flag set indicating that a re-routing event was detected.

According to one embodiment, by default, the AGTree mechanism operates end-to-end to accomplish its functionalities.. However, combined with an external session controller, according to one embodiment the AGTree mechanism may work edge-to-edge, limiting its operation to each network. For instance, a session controller which has an inter-network end-to-end operation may trigger AGTree at the edges of each network (ingress and egress routers) allowing tree aggregation to be processed for that request inside the network an in the inter-network link.

Embodiments of the AGTree mechanism provide the following advantages:
- Decreases the system complexity and reduces its operational costs by using a unique solution for creating distribution trees in advance, controlling the aggregations and the session connectivity;
- Reduces the session set-up time;
- Reduces significantly the signalling and state overhead.

In the following embodiments of the AGTree mechanism will be described in somewhat more detail.

Each AGTree-E agent stores lists of active sessions, flows and the distribution paths. Each active session entry contains the session identifier and a list with the associated flows, and each flow entry keeps its flow identifier, CoS, bit rate, source address, destination address, egress address, access address and the distribution path. Each entry of the list of distribution paths is filled with the IP address of the core nodes which compose the entire path. In multicast-aware networks, AGTree stores multicast state on each outgoing interface, being filled with their associated multicast channels. The AGTree-C agents only store the multicast states when applicable.

In the following there will be described the functionalities implemented by the AGTree mechanism in order to over-provision connectivity resources.

In the following the in-advance creation of the distribution trees will be explained. "In advance" here means during an initialisation phase such as system bootstrap, or any initialisation phase which takes place before actually distributing a session.

All distribution trees (in one embodiment all possible distribution trees from an ingress node to an egress node or any combination of egress nodes or for any combination of ingress and egress nodes) are created by the AGTree mechanism during an initialisation phase, e.g. at the system bootstrap, provisioning thus the environment along its entire lifetime for all future requests without requiring extra signalling for resource configuration. The term "all possible" distribution trees should be understood such that it not necessarily encompasses all theoretically possible distribution trees (although this may be possible as well) but such that from this reservoir of "all theoretically possible distribution trees" only those which may from a practical point be chosen are included. This may e.g. exclude some distribution trees for efficiency reasons, e..g. trees where an ingress node or an edge node would form an intermediate node of the tree. One may therefore say instead of "all possible distribution trees" "all distribution trees from which one may be chosen for the multicast distribution of a session" based on a given set of ingress and egress nodes participating in that session. The intention is to provide a reservoir of distribution paths such that for a (or for any) given combination of ingress and egress nodes participating in the session there is already existing a corresponding distribution path which may be used without any signal overhead being necessary for its creation. In other words, if a session requires a certain distribution path from an ingress node or a source node to one or more egress nodes, the corresponding distribution path has already been created during said initialisation phase. Therefore; according to one embodiment for any given set of receivers (corresponding to a certain set of egress nodes to which they are connected) and a corresponding ingress node (or more of them, if many sessions are running in parallel) there will be a suitable distribution path which may just be chosen for the distribution, and if the set of receivers (or egress nodes) changes, there may be performed a switching to a different distribution path matching with the new set of receivers (or egress nodes). In the same manner a switching may be performed if the ingress node (or the set of ingress nodes) changes..

Each distribution tree which has been created is identified by a multicast tuple composed by the source IP address (S) and a destination IP address (G). The former is the ingress router which is the enter point of the session-flows, and the later is an IP multicast address which according to one embodiment may be assigned via the Multi-user Control Interface.

According to one embodiment the initialisation of the distribution trees is accomplished in a single phase in unicast networks and in three phases in multicast networks. The first phase, common to both types of connectivity support, consists in discovering the available distribution paths within the network and creating the un-ramified aggregation trees..

The distribution paths are discovered by flooding operations initialised by the ingress routers, which consists in flooding the network with a "flooding message" referred to hereafter as TREE message with a specific flag set as *on*, indicating initialisation. Upon receiving the TREE(*I*) message, the router propagates the message on each outgoing interface except the one in which the message was received. Each message carries the local IP address, filled in the distribution path list, of the outgoing interface used for propagation. After receiving the TREE(*I*) message, an egress router composes a RESPONSE message corresponding to the TREE(*I*) message received and sends it to the ingress router which is source of the equivalent TREE(*I*) message. The RESPONSE messages carry the distribution path list of the equivalent TREE(*I*) message, the local outgoing interfaces and a confirmation code (*OK*).

The flooding operation according to one embodiment is based on the unicast routing protocol, and this way it provides all available distribution paths. Since the benefits derived from using distribution paths (e.g., avoidance of packet duplication) are dependent upon their shape, AGTree according to one embodiment filters the distribution paths and chooses only the best paths. The "filtering" may comprise the selection of the best paths or it may comprise the discarding of inefficient paths, or it may comprise both. The performance of a multicast tree broadly depends upon its topology, where the amount of comprised links and where branching occurs within the tree must be considered. Once long trees results in heavy transmission costs, the AGTree mechanism in one embodiment discards paths in which ingress routers are within the forwarding nodes. Moreover, the distribution trees demands more network resources (e.g., bandwidth) as the branch gets close to their root, increasing thus the amount of packet duplications. Since the worst case of multicast is when the root of a tree is a branching point, AGTree discards the paths with branching point in the ingress routers.

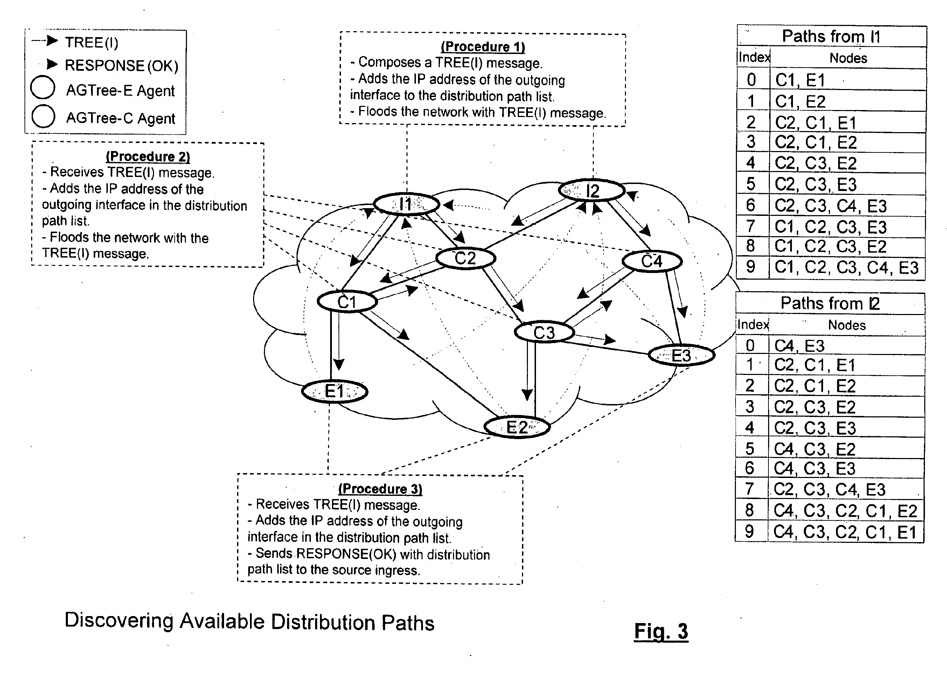

Figure 3 shows the operations of the first phase for initialising the resources, where the AGTree-E agent at each ingress router (*I1* and *I2*) floods the network with a TREE(/). All core nodes reached by the TREE(*I*) message add in the distribution path list the local IP address of the outgoing interface in which the packet will be sent to and forward it into all interfaces, except the one in which the message was received. After receiving the TREE(*I*) message, each egress router (*E1*, E2 and E3) composes one RESPONSE message, corresponding to each TREE(*I*) message received, adds its local IP address in the distribution path list and sends it to the ingress router which is source of the equivalent TREE(I) message.. The RESPONSE messages carry the distribution path list of the equivalent TREE(*I*) message and a confirmation code (*OK*). When *I*2 receives the TREE(I) message sent by *I1,* no RESPONSE message is sent to *I1* in order to avoid path entries comprised with /*2*.

Based on the information provided by each RESPONSE(*OK*) message received, the AGTree-E at /*1* and /*2* updates the local distribution path information. AGTree creates the un-ramified aggregation trees by assigning a multicast tuple (S, G) to each distribution path entry (not show in Figure 3 for simplification). The source (root node) is the IP address of the ingress router which received the RESPONSE(*OK*) message, and the destination is a multicast IP address assigned via the Multi-user Control Interface.

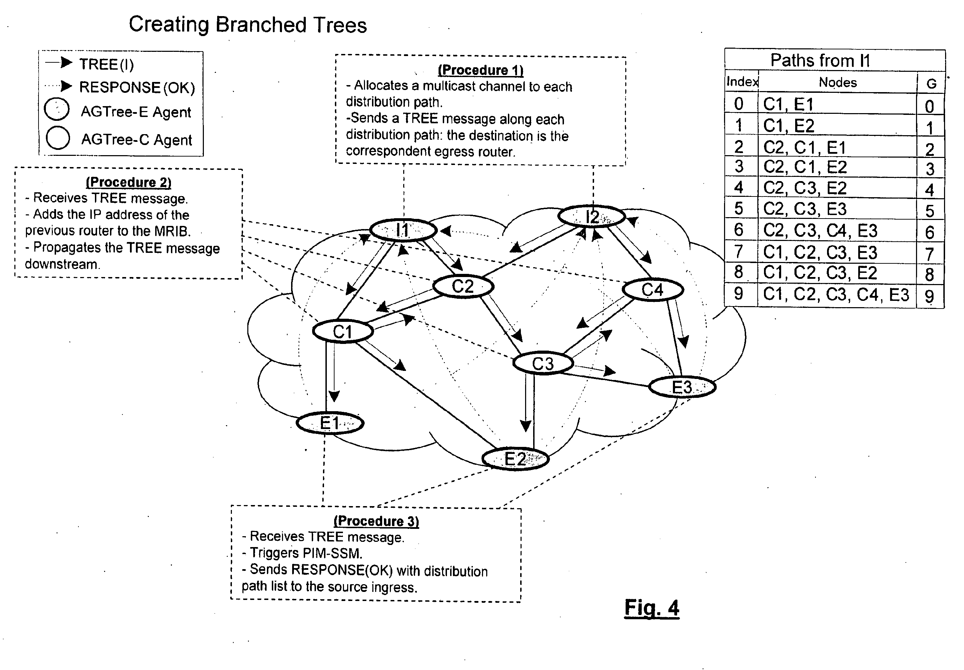

In multicast-aware networks, the initialisation of the distribution trees requires two more phases, where the second phase aims to configure the un-ramified multicast aggregation trees in the nodes along their paths, which is not addressed to unicast networks The AGTree mechanism may control the multicast trees in two ways, by direct configuring the multicast address in the outgoing interface during the end-to-end-signalling or controlling the MRIB entries (in the end-to-end signalling) and triggering the available multicast routing protocol at the egress router so as to create the multicast tree. For the illustration provided by Figure 4, the AGTree mechanism operates in the latter method. Therefore, the AGTree-E agent at each ingress router firstly allocates a multicast channel (destination address and port) to each distribution path entry.

Figure 4 shows the operations to create the un-ramified multicast aggregation trees where, for simplification, the signalling events are not extensively depicted and it is considered only the state at *I1*. The table of paths from I1 is composed by the key index (*Index*) of each distribution path, the nodes (Nodes) that compose each path and the IP multicast destination (G) allocated to each path (Gx). The source address is not filled in the table since it is the local IP address (e.g., the IP address of the ingress router). After allocating a multicast channel to a distribution path, AGTree sends a TREE message along the distribution path. Each AGTree-C adds in the MRIB the IP address of the previous router and propagates the message downstream. After receiving the TREE message, the AGTree-E at the egress node also updates the MRIB with the IP address of the previous router, triggers the multicast routing protocol for creating the multicast tree and sends a RESPONSE(OK) message to the requester ingress node, which then implements the third phase.

The third phase addresses to compute and create the ramified multicast aggregation trees that cover more than one egress node. AGTree computes the ramified trees by combining all un-ramified trees taking into consideration the ingress router and the available egress routers. After that, AGTree discards all trees with branching point at the root and signals each one with a TREE message in order to configure the multicast trees.

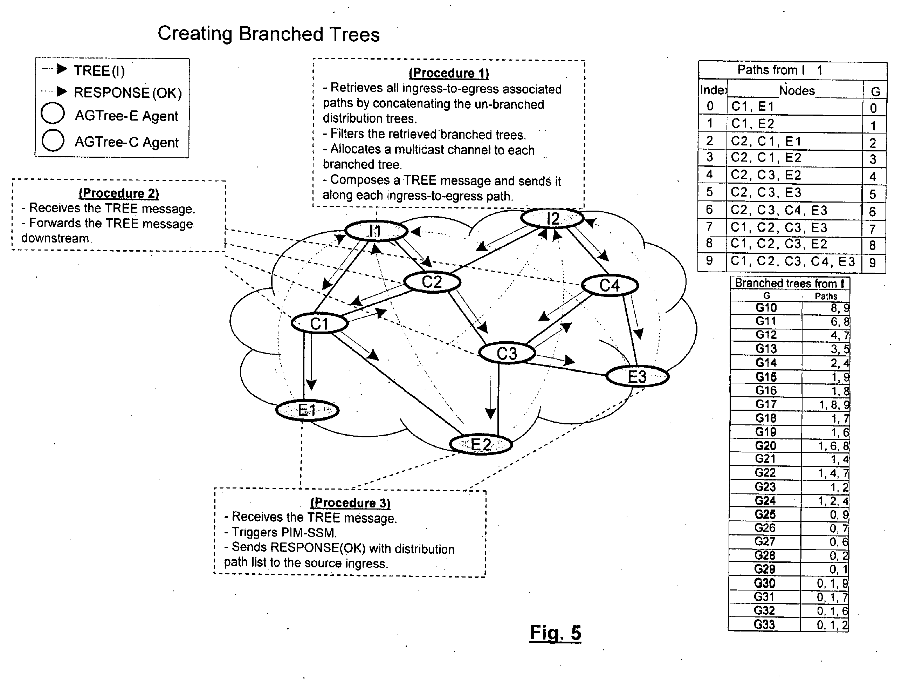

Figure 5 shows the list of the ramified multicast aggregation trees, only at *I1* for simplification. To each computed ramified trees, AGTree allocates a multicast channel and sends a TREE message in order to configure the multicast tree. The TREE message is sent towards each egress router of the distribution paths comprising the ramified tree. AGTree configures the multicast channel indicated by the received message in the outgoing interface towards the destination of the message (i.e., the egress router). When an agent realises that the indicated multicast channel is already configured in the retrieved interface, the operation is skipped. After receiving the TREE message, the egress router sends a RESPONSE(OK) message towards the ingress.

After all aggregation trees are created, the AGTree mechanism according to one embodiment controls the session connectivity in order to propagate the session-flows into the aggregation trees and such as to avoid waste of resources, e.g. due to the replication of packets on leaves of a tree with no active user members.

In the following the session connectivity control according to embodiments of the invention will be described in somewhat more detail..

The session connectivity control functionality is used by the AGTree mechanism as the support to ensure the session continuity along the end-to-end session path during its entire lifetime. The path may be heterogeneous in terms of connectivity schemes, being for instance, composed by unicast and multicast networks.

The end-to-end connectivity control over heterogeneous networks can be accomplished by using tunnel-based (see e.g. B. Zhang et al, "Host Multicast: A Framework for Delivering Multicast to End Users", Annual Joint Conference of the IEEE Computer and Communications Societies, June 2002) or translation-based (see e..g.. E.. Pearce *et al,* "System and Method for Enabling Multicast Telecommunications", *Application Patent,* US7079495 B1, July 2006) approaches. According to one embodiment, by default, AGTree uses the tunnel-based approach, where the aggregation node adds an extra header in the incoming packets of each session-flow, being filled with their original IP header five tuple. On the other hand, the IP header is updated with the five tuple information of the matched aggregation tree. At the deaggregator node (egress), AGTree updates the IP header with the five tuple carried in the extra header and removes it from the packet. Alternatively, AGTree may work combined with an external end-to-end connectivity control solutions (e.g., translation-based). This way, AGTree provides to the application the forwarding information of the selected aggregation channel.

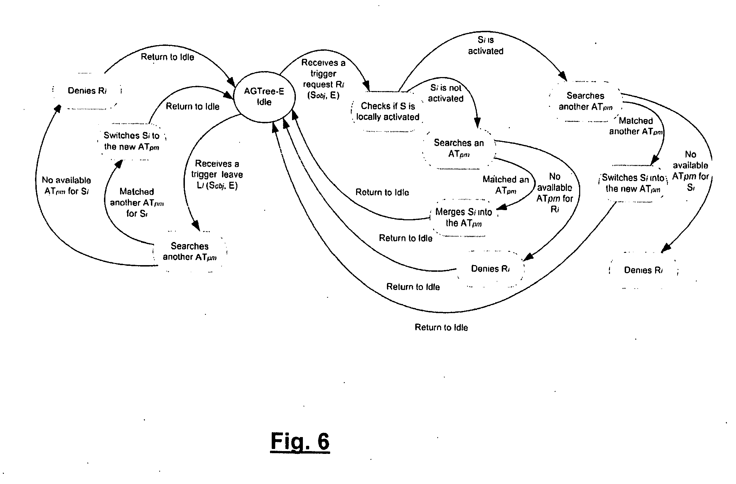

Moreover, AGTree controls the switching of aggregation trees in order to avoid packet replication to undesired destinations. The state diagram shown in Figure 6 outlines the operations of AGTree to control the session connectivity on-demand in terms of switching of aggregation trees.. Whenever triggered with a session request (R*i*) carrying the session object (Sobj) of a session (Si) and the egress router IP (E), AGTree-E must locally retrieve a perfect matching aggregation tree (ATpm) for merging R*i*. However, when S*i* is locally activated on another egress router, AGTree retrieves another ATpm which supplies both egress routers (the existing one and the new one) and switches S*i* into the new AT*pm*. When a session has user members no longer activated at an access/egress router, such as due to a handoff or session leaving, AGTree must switch the session to another multicast tree in order to avoid waste of resources. Thus, an external mechanism able to implement this detection (such as described in E. Cerqueira et al. "Multi-user Session Control in the Next Generation Wireless System", 4th ACM International Workshop on mobility Management and Wireless Access, Malaga, Spain, Oct 2006), may report this situation to AGTree (L*i*), which then searches a new ATpm and switches S*i* accordingly..

One may say that according to one embodiment the switching of aggregation trees is performed such that for a given set of egress routers for a certain session there is chosen a "perfect match" or "best match" aggregation tree, and if the set of egress routers where there are receivers connected participating in the session changes (e.g. due to a new receiver joining or one receiver leaving) the switching is performed such that a new aggregation tree is chosen from the ones which have been generated during the initialisation phase. "Best match" or perfect match here according to one embodiment means that the selected aggregation tree has no empty leave nodes formed by an egress node not participating in the session, and further that there is a leave node in the selected aggregation tree for each participating in the session. In this manner the system can adapt to changing circumstances without a large signalling overhead.

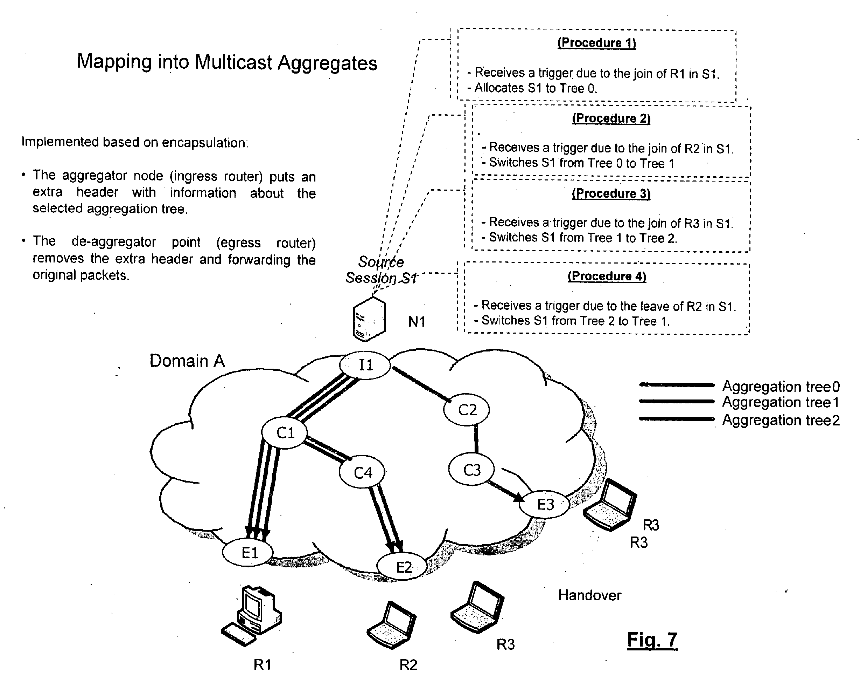

Figure 7 illustrates the operations accomplished by AGTree in controlling on-demand session connectivity, in terms of switching aggregation trees, in a general scenario where the mobility support (e.g., Mobile IP) and session control (e.g., provided by the SEACON mechanism described in the patent application mentioned before) are considered. For simplification, the mobility and session control operations are not considered in the illustration. Consider the domain A as a network with PIM-SSM multicast support, where *N1* is a source server supplying session *S1*. The SEACON mechanism (mentioned already before) on *I1* triggers AGTree-E with the session request *R1* for *S1* due to the joint of *R1* in *E1*. AGTree merges *S1* into the aggregation tree 0, since it exclusively serves *E1*, and then reports the SEACON mechanism with the identification of the channel so that enable *R1* to receive the content of *S1*. tree 0 comprises I1-C1-E1. Next, SEACON triggers AGTree-E with session request R2 for *S1*, due to the joint of R2 in *E2*. This way, AGTree-E switches *S1* from aggregation tree 0 to aggregation tree 1 (which additionally comprises a branch at C1 and C1-C4-E2) for serving *E1* and *E2* simultaneously and reports SEACON with the identification of the new channel. In this case R1 may use IGMP or MLD to leave the old tree and join the new one. The same occurs due to the *S1* joint of R3 in E3, where the AGTree mechanism switches *S1* from aggregation tree 1 to aggregation tree 2 which now additionally comprises a branch at I1 and the path I1-C2-C3-E3. When R3 moves away from E3 to *E2* and no user members are activated on E3, the AGTree mechanism is triggered at *I1 e.g.* (by the SEACON mechanism) with a leave request from *E3*. After the attaching of R3 to E2, the AGTree mechanism is triggered with a request from R3 to join *S1* at E2. Since AGTree realises that *S1* is activated on *I1*, and supplies *E1* and E2, AGTree switches *S1* from aggregation tree 2 to aggregation tree 1.

In the case of a new handoff occurrence, AGTree works in the same way, after triggered at *I1*. Upon matched a new perfect aggregation tree, AGTree performs the switching of the old tree to the new one.

There have been described embodiments herein for illustrative purposes. According to one embodiment there is provided a configuration of a reservoir of local multicast trees during initialisation such as at bootstrap. Then there may be performed a mapping of external multicast trees to the internal ones generated in advance, and there may be performed an adjustment of the mapping of external multicast trees based on the position of receivers such as to avoid leaky or incomplete matches between the receivers and the selected multicast tree.

One embodiment of the invention may be summarised as follows.
- a) Creation of aggregated multicast trees in advance (e.g. during bootstrap or initialization):

- a1) Discover of the available distribution paths.
- a2) Creation of un-branched trees.
- a3) Creation of branched distribution trees.
- a4) Choose the best paths by filtering:

- a4i)Discard paths with ingress routers as middle nodes.
- a4ii)Discard paths with branching points in ingress routers.

b) Mapping of multicast requests to aggregated trees:

- b1) Based on flow encapsulation.
- b2) Switches multicast trees to avoid delivering data to leaf nodes with no users associated to them.

Operation a1) is schematically illustrated in Fig. 3, in operation a2) in Fig. 4 and operation a4) in Fig. 5. The mapping is schematically illustrated in Fig. 7

It is apparent that modifications to this and other embodiments can be made by the skilled person, particularly by combining features of the foregoing description in such a way as is has not been explicitly disclosed. It is, however, to be understood that the foregoing disclosure should also encompass such combinations of features for which it is clear to the skilled person that a feature which has been mentioned in connection with one embodiment may also be used in connection with another embodiment where it has not been explicitly mentioned. For example, in the above list of features only a4ii) without a4i) may be combined with the other features, even if such a combination is not explicitly disclosed it would be understood by the skilled person that such combinations are to be considered as at least implicitly disclosed.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g comprise a node or element (such as a router) in a network which is suitably programmed such that it is able to carry out a session-aware connectivity control as described in the embodiments of the invention..

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore..

Embodiments of the invention may be implemented e..g.. by nodes in a network or any entities in a network which are programmed to operate in accordance with the multicast tree allocation mechanisms as described before.

## Claims

1. A method for multicast tree allocation in a network, said method comprising:
creating during an initialisation phase a plurality of possible multicast distribution trees (Tree 0, Tree 1. Tree 2), wherein said plurality of possible multicast distribution trees (Tree 0, Tree 1, Tree 2) is created such that for each combination or for each realistic combination of egress nodes (E1, E2, E3) and a given ingress node (I1, I2) there is a corresponding multicast distribution tree which has been created and which can be used to switch between the created trees in order to adapt to a change in the set of egress nodes;
switching of distribution trees (Tree 0) by switching to another distribution tree (Tree 1) selected from the distribution trees (Tree 1, Tree 2) which have been created during said initialisation phase, wherein said switching is performed In response to an egress node (E2) joining or leaving a session
wherein
said multicast trees (Tree 0, Tree 1, Tree 2) comprise multicast aggregation trees in which multiple multicast groups are sharing one distribution tree, and said method being **characterized in that** :
controlling the session connectivity of a session (S1) by selecting a suitable aggregation tree such that the selected aggregation tree (Tree 0, Tree 1, Tree 2) has no empty leaf nodes formed by an egress node of said network not participating in the session, and further such that there is a leaf node in the selected aggregation tree for each node (R1, R2, R3) participating in the session,
wherein said creation of distribution trees (Tree 0, Tree 1, Tree 2) further comprises the filtering of distribution paths, wherein said filtering comprises the selection of the best paths or the discarding of inefficient paths, and
wherein said filtering comprises:
discarding paths in which ingress routers of said network are within the forwarding nodes of a path, and/or
discarding the paths with a branching point in an ingress router of said network.

2. The method of claim 1, said method comprising:
creating during said initialisation phase all possible distribution trees (Tree 0, Tree 1, Tree 2) such that if a session (S1) requires a certain distribution path from an ingress node (I1,I2) or a source node to one or more egress nodes (E1, E2, E3) of said network, the corresponding distribution path (Gx) has already been created during said initialisation phase.

3. The method of claim 2, wherein each distribution tree (Tree 0, Tree 1, Tree 2) which has been created is identified by a multicast tuple (S,G) composed by the source IP address (G) being the address (S) of an ingress router (E1, E2, E3) of said network which is the point where session-flows (S1) enter the network and a destination IP address (G) being an IP multicast address (G).

4. The method of one of the preceding claims, further comprising:
discovering the available distribution paths (G0 to G9) within the network and creating un-ramified aggregation trees.

5. The method of claim 4, further comprising:
flooding the network during initialisation by the ingress nodes (I1) of said network with a TREE message (TREE(I1)), and upon receiving the TREE message, a router (C1 to C4) which has received said TREE message (TREE(I1)) propagates the message on each outgoing interface except the one in which the message was received, wherein each message (TREE(I1)) carries the local IP address, filled in the distribution path list, of the outgoing interface used for propagation, said method further comprising:
after receiving the TREE message (TREE(I1) , an egress node (E1, E2, E3) of said network composes a RESPONSE message (RESPONSEE(OK)) corresponding to the TREE message (TREE(I1)) received and sends it to the ingress router (I1) which is source of the equivalent TREE message (TREE(I1)), said RESPONSE message (RESPONSEE(OK)) carrying the distribution path list of the equivalent TREE message (TREE(I1)) and the local outgoing interfaces.

6. The method of one of the preceding claims, said initialisation phase further comprising:
creating the un-ramified multicast aggregation trees G0 to G9), said creation comprising:
after having allocated a multicast channel to a distribution path, sending a TREE message (TREE(I1)) along the distribution path, wherein each core node (C1 to C4) adds in the multicast routing information base (MRIB) the IP address of the previous node and propagates the message (TREE(I1)) downstream, said creation further comprising:
after receiving the TREE message (TREE(I1)), updating by an egress node (E1, E2, E3) of said network the MRIB with the IP address of the previous router (C1 to C4) and triggering the multicast routing protocol for creating the multicast tree.

7. The method of one of the preceding claims, said initialisation phase further comprising:
computing and creating ramified multicast aggregation trees (G10 to G33) that cover more than one egress node (E1, E2, E3) of said network, wherein the ramified trees (G10 to G33) are computed by combining all un-ramified trees (G0 to G9) taking into consideration the ingress router (I1) of said network and the available egress routers (E1, E2, E3) of said network,
allocating a multicast channel to each of the ramified multicast aggregation trees (G10 to G33).

8. The method of claim 7, further comprising:
discarding all trees with branching point at the root of the tree, and
sending a signalling message to all trees in order to configure the multicast trees.

9. The method of one of the preceding claims, further comprising:
controlling the session connectivity of a session in order to propagate the one or more session-flows of a session into the created distribution trees such as to avoid a waste of resources.

10. An apparatus for multicast tree allocation in a network, said apparatus comprising:
a module for creating during an initialisation phase
a plurality of possible multicast distribution trees (Tree 0, Tree 1, Tree 2), wherein said plurality of possible multicast distribution trees (Tree 0, Tree 1, Tree 2) is created such that for each combination or for each realistic combination of egress nodes (E1, E2, E3) and a given ingress node (I1, I2) there is a corresponding multicast distribution tree which has been created and which can be used to switch between the trees in order to adapt to a change in the set of egress nodes;
a module for switching of distribution trees (Tree 0) by switching to another distribution tree (Tree 1) selected from the distribution trees (Tree 1. Tree 2) which have been created during said Initialisation phase, wherein said switching is performed in response to an egress node (E2) of said network joining or leaving a session wherein
said multicast trees (Tree 0, Tree 1, Tree 2) comprise multicast aggregation trees in which multiple multicast groups are sharing one distribution tree, and are **characterised in that** said apparatus comprises:
a module for controlling the session connectivity of a session (S1) by selecting a suitable aggregation tree such that the selected aggregation tree (Tree 0, Tree 1 Tree 2) has no empty leaf nodes formed by an egress node of said network not participating in the session, and further such that there is a leaf node in the selected aggregation tree for each node (R1, R2, R3) participating in the session, wherein said module for creating is further configured to
filter of distribution paths, wherein said filtering comprises the selection of the best paths or the discarding of inefficient paths, and
wherein said filtering comprises:
discarding paths in which ingress routers of said network are within the forwarding nodes of a path, and/or
discarding the paths with a branching point in an ingress router of said network,

11. The apparatus of claim 10, further comprising:
a module for performing all the steps of a method according to one of claims 2 to 9.

12. computer program comprising computer program code which when being executed on a computer enables said computer to carry out all the steps of a method according to one of claims 1 to 9.

## Patentansprüche

1. Ein Verfahren zur Multicast-Baum-Allokation in einem Netzwerk, wobei das Verfahren aufweist:
Erzeugen einer Mehrzahl von möglichen Multicast-Verteilungsbäumen (Tree 0, Tree 1, Tree 2) während einer Initialisierungsphase, wobei die Mehrzahl von möglichen Multicast-Verteilungsbäumen (Tree 0, Tree 1, Tree 2) so erzeugt wird, dass für jede Kombination oder für jede realistische Kombination von Austrittsknoten (E1, E2, E3) und einen gegebenen Eintrittsknoten (I1, I2) es einen entsprechenden Multicast-Verteilungsbaum gibt, der erzeugt wurde und verwendet werden kann, um zwischen den erzeugten Bäumen umzuschalten, um sich an eine Veränderung in dem Satz von Austrittsknoten anzupassen;
Umschalten von Verteilungsknoten (Tree 0) durch Umschalten auf einen anderen Verteilungsbaum (Tree 1), der aus den Verteilungsbäumen (Tree 1,
Tree 2), die während der Initialisierungsphase erzeugt wurden, ausgewählt wurde, wobei das Umschalten durchgeführt wird in Reaktion auf das Beitreten oder das Verlassen eines Austrittsknotens (E2) zur einer Session,
wobei
die Multicast-Verteilungsbäumen (Tree 0, Tree 1, Tree 2) Multicast-Aggregationsbäume aufweisen, in denen sich mehrere Multicastgruppen einen Verteilungsbaum teilen und das Verfahren **gekennzeichnet ist durch**:
Steuern der Session-Konnektivität einer Session (S1) **durch** Auswählen eines geeigneten Aggregationsbaums derart, dass der ausgewählte Aggregationsbaum (Tree 0, Tree 1, Tree 2) keine leeren Blattknoten aufweist, die gebildet werden **durch** einen Austrittsknoten des Netzwerks, der nicht an der Session teilnimmt und ferner derart, dass es einen Blattknoten in dem ausgewählten Aggregationsbaum für jeden Knoten (R1, R2, R3) gibt, der an der Session teilnimmt, wobei
die Erzeugung von Verteilungsbäumen (Tree 0, Tree 1, Tree 2) ferner aufweist:
Filtern von Verteilungspfaden, wobei das Filtern umfasst: Die Auswahl der besten Pfade oder das Verwerfen von ineffizienten Pfaden, und wobei das Filtern aufweist:
Verwerfen von Pfaden, in denen Eintrittsrouter des Netzwerks unter den weiterleitenden Knoten eines Pfades sind, und/oder Verwerfen der Pfade mit einem Verzweigungspunkt in einem Eintrittsrouter des Netzwerks.

2. Das Verfahren nach Anspruch 1, wobei das Verfahren aufweist:
Erzeugen von allen möglichen Verteilungsbäumen (Tree 0, Tree 1, Tree 2) während der Initialisierungsphase dergestalt, dass wenn eine Session (S1) einen bestimmten Verteilungspfad von einem Eintrittsknoten (I1, I2) oder
einem Quellknoten zu einem oder mehreren Austrittsknoten (E1, E2, E3) des Netzwerks fordert, der entsprechende Verteilungspfad (Gx) bereits während der Initialisierungsphase erzeugt wurde.

3. Das Verfahren nach Anspruch 2, wobei jeder Verteilungsbaum (Tree 0, Tree 1, Tree 2), der erzeugt wurde, durch ein Multicast-Tupel (S, G) indentifiziert wird, das gebildet wird durch die Quell-IP-Adresse (G) welche die Adresse (S) eines Eintrittsrouters (E1, E2, E3) des Netzwerks ist, welcher der Punkt ist, wo Session-Flüsse (S1) in das Netzwerk eintreten und eine Ziel-IP-Adresse (G), die eine IP-Multicast-Adresse (G) ist.

4. Verfahren nach einem der vorhergehenden Ansprüche, ferner aufweisend:
Entdecken der verfügbaren Verteilungspfade (G0 bis G9) innerhalb des Netzwerks und Erzeugen von unverzweigten Aggregationsbäumen.

5. Das Verfahren nach Anspruch 4, ferner aufweisend:
Fluten des Netzwerks während der Initialisierungsphase durch den Eintrittsknoten (I1) des Netzwerks mit einer TREE-Nachricht (TREE (I1)), und auf Empfang der TREE-Nachricht hin propagiert ein Router (C1 bis C4), der die TREE-Nachricht (TREE (I1)) erhalten hat, die Nachricht auf jedem ausgehenden Interface ausgenommen dasjenige, in dem die Nachricht empfangen wurde, wobei jede Nachricht (TREE (I1)) die lokale IP-Adresse trägt, die in der Verteilungspfadliste gefüllt ist, des ausgehenden Interfaces,
das für die Propagation verwendet wird, wobei das Verfahren ferner aufweist:
Nach Erhalt der TREE-Nachricht (TREE (I1)), bildet ein Austrittsknoten (E1, E2, E3) des Netzwerks eine RESPONSE-Nachricht (RESPONSE E (OK)),
die der empfangenen TREE-Nachricht (TREE (I1)) entspricht und sendet sie zu dem Eintrittsrouter (I1), der die Quelle der equivalenten TREE-Nachricht (TREE (I1)) ist, wobei die RESPONSE-Nachricht (RESPONSE E (OK)) die Verteilungspfadliste der equivalenten TREE-Nachricht (TREE (I1)) und des lokalen ausgehenden Interfaces trägt.

6. Das Verfahren nach einem der vorhergehenden Ansprüche, wobei die Intitialisierungsphase ferner aufweist:
Erzeugen der unverzweigten Multicast-Aggregationsbäume (G0 bis G9),
wobei die Erzeugung aufweist:
Nach der Allokierung eines Multicast-Kanals zu einem Verteilungspfad, Senden einer TREE-Nachricht (TREE (I1)) entlang des Verteilungspfads, wobei jeder Kernknoten (C1 bis C4) in der Multicast-Routing-Informationsbasis (MRIB) die IP-Adresse des vorgehenden Knotens hinzufügt und die Nachricht (TREE (I1)) downstream progagiert, wobei die Erzeugung ferner aufweist:
Nach Empfang der TREE-Nachricht (TREE (I1)), Updaten der MRIB durch einen Austrittsknoten (E1, E2, E3) des Netzwerks mit der IP-Adresse des vorhergehenden Routers (C1 bis C4) und Triggern des Multicast-Routing-Protokolls zum Erzeugen des Multicastbaums.

7. Das Verfahren nach einem der vorhergehenden Ansprüche, wobei die Initialisierungsphase ferner aufweist:
Berechnen und Erzeugen von verzweigten Multicast-Aggregationsbäumen (G10 bis G33), die mehr als einen Austrittsknoten (E1, E2, E3) des Netzwerks abdecken, wobei die verzweigten Bäume (G10 bis G33) berechnet werden durch Kombinieren aller unverzweigten Bäume (G0 bis G9) unter Berücksichtigung des Eintrittsrouters (I1) des Netzwerks und der verfügbaren Austrittsrouter (E1, E2, E3) des Netzwerks,
Allokieren eines Multicastkanals zu jedem der verzweigten Multicast-Aggregationsbäume (G10 bis G33).

8. Das Verfahren nach Anspruch 7, ferner aufweisend:
Verwerfen aller Bäume mit Verzweigungspunkten an der Wurzel des Baums, und
Senden einer Signalnachricht an alle Bäume, um die Multicastbäume zu konfigurieren.

9. Das Verfahren nach einem der vorhergehenden Ansprüche, ferner aufweisend:
Steuern der Sessionkonnektiviät einer Session, um die ein oder mehreren Session-Flüsse einer Session in die erzeugten Verteilungsbäume zu propagieren, so dass eine Verschwendung von Resourcen vermieden wird.

10. Eine Vorrichtung zur Multicast-Baumallokation in einem Netzwerk, wobei die Vorrichtung aufweist:
ein Modul zum Erzeugen einer Mehrzahl von möglichen Multicast-Verteilungsbäumen (TREE 0, TREE 1, TREE 2) während einer Initialisierungsphase, wobei die Mehrzahl von möglichen Multicast-Verteilungsbäumen (TREE 0, TREE 1, TREE 2) derart erzeugt wird, dass für jede Kombination oder für jede realistische Kombination von Austrittsknoten (E1, E2, E3) und einem gegebenen Eintrittsknoten (I1, I2) es einen entsprechenden Multicastverteilungsbaum gibt, der erzeugt wurde und der verwendet werden kann, um zwischen den Bäumen umzuschalten, um sich an eine Veränderung in dem Satz von Austrittsknoten anzupassen;
ein Modul zum Umschalten von Verteilungsbäumen (TREE 0) durch Umschalten zu einem anderen Verteilungsbaum (TREE 1), der ausgewählt wurde aus den Verteilungsbäumen (TREE 1, TREE 2), die erzeugt wurden während der Initialisierungsphase, wobei das Umschalten durchgeführt wird in Reaktion darauf, dass ein Austrittsknoten (E2) des Netzwerks einer Session beitritt oder eine Session verlässt, wobei die Multicastbäume (TREE 0, TREE 1, TREE 2) Multicast-Aggregationsbäume aufweisen, in denen mehrere Multicast-Gruppen einen Verteilungsbaum sich teilen, und **gekennzeichnet ist dadurch**, dass die Vorrichtung aufweist:
ein Modul zum Steuern der Sessionkonnektivität einer Session (S1) **durch** Auswahl eines geeigneten Aggregationsbaums derart, dass der ausgewählte Aggregationsbaum (TREE 0, TREE 1, TREE 2) keine leeren Blattknoten aufweist, die gebildet werden **durch** einen Austrittsknoten des Netzwerks,
der nicht an der Session teilnimmt, und ferner **dadurch**, dass es eine Blattknoten in dem ausgewählten Aggregationsbaum für jeden Knoten (R1, R2, R3) gibt, der an der Session teilnimmt, wobei das Modul zum Erzeugen ferner ausgebildet ist zum Filtern von Verteilungspfaden, wobei das Filtern umfasst die Auswahl der besten Pfade oder das Verwerfen von ineffizienten Pfaden und wobei das Filtern aufweist:
Verwerfen von Pfaden, bei denen Eintrittsrouter des Netzwerks unter den weiterleitenden Knoten eines Pfades sind, und/oder Verwerfen von Pfaden mit einem Verzweigungspunkt in einem Eintrittsrouter des Netzwerks.

11. Die Vorrichtung nach Anspruch 10, ferner aufweisend:
ein Modul zum Durchführen aller Schritte eines Verfahrens gemäß einem der Ansprüche 2 bis 9.

12. Ein Computerprogramm aufweisend Computerprogrammcode der, wenn er auf einem Computer ausgeführt wird, den Computer in die Lage versetzt, all die Schritte eines Verfahrens gemäß einem der Ansprüche 1 bis 9 auszuführen.

## Revendications

1. Procédé pour l'attribution d'une arborescence de multidiffusion dans un réseau, ledit procédé comprenant :
créer au cours d'une phase d'initialisation d'une pluralité d'arborescences de distribution de multidiffusion possibles (Tree 0, Tree 1, Tree 2), dans lequel ladite pluralité d'arborescences de distribution de multidiffusion possibles (Tree 0, Tree 1, Tree 2) est créée de sorte que pour chaque combinaison ou pour chaque combinaison réaliste de noeud de sortie (E1, E2, E3) et d'un noeud d'entrée donné (I1, I2) il y a une arborescence de distribution de multidiffusion correspondante qui a été créée et qui peut être utilisée pour commuter entre les arborescences créées afin de s'adapter à un changement dans l'ensemble de noeuds de sortie ;
commuter d'arborescences de distribution (Tree 0) en commutant sur une autre arborescence de distribution (Tree 1) sélectionnée parmi les arborescences de distribution (Tree 1, Tree 2) qui ont été créées au cours de ladite phase d'initialisation, dans lequel ladite commutation est effectuée en réponse au fait qu'un noeud de sortie (E2) rejoint ou quitte une session ;
dans lequel
lesdites arborescences de multidiffusion (Tree 0, Tree 1, Tree 2) comprennent des agrégations d'arborescences de multidiffusion dans lesquelles de multiples groupes de multidiffusion partagent une arborescence de distribution,
et ledit procédé étant **caractérisé par** :
la commande de la connectivité de session d'une session (S1) en sélectionnant une agrégation d'arborescence appropriée de sorte que l'agrégation d'arborescence (Tree 0, Tree 1, Tree 2) sélectionnée n'a pas de noeud de feuille vide formé par un noeud de sortie dudit réseau ne participant pas à la session, et en outre de sorte qu'il y a un noeud de feuille dans l'agrégation d'arborescence sélectionnée pour chaque noeud (R1, R2, R3) participant à la session,
la création d'arborescences de distribution (Tree 0, Tree 1, Tree 2) comprend en outre le filtrage de chemins de distribution, dans lequel ledit filtrage comprend la sélection des meilleurs chemins ou le rejet des chemins inefficaces, et
dans lequel ledit filtrage comprend :
le rejet des chemins dans lesquels des routeurs d'entrée dudit réseau sont à l'intérieur des noeuds de transfert d'un chemin, et/ou
le rejet des chemins avec un point d'embranchement dans un routeur d'entrée dudit réseau.

2. Procédé selon la revendication 1, ledit procédé comprenant :
la création au cours de ladite phase d'initialisation de toutes les arborescences de distribution possibles (Tree 0, Tree 1, Tree 2) de sorte que si une session (S1) nécessite un certain chemin de distribution d'un noeud d'entrée (I1, I2) ou d'un noeud de source à un ou plusieurs noeuds de sortie (E1, E2, E3) dudit réseau, le chemin de distribution correspondant (Gx) a déjà été créé au cours de ladite phase d'initialisation.

3. Procédé selon la revendication 2, dans lequel chaque arborescence de distribution (Tree 0, Tree 1, Tree 2) qui a été créée est identifiée par un tuple de multidiffusion (S, G) composé de l'adresse IP de source (G) constituant l'adresse (S) d'un routeur d'entrée (E1, E2, E3) dudit réseau qui est le point où les flux de session (S1) entrent dans le réseau et d'une adresse IP de destination (G) constituant une adresse de multidiffusion IP (G).

4. Procédé selon l'une des revendications précédentes, comprenant en outre :
découvrir des chemins de distribution disponibles (G0 à G9) à l'intérieur du réseau et la création d'agrégation d'arborescences non ramifiées.

5. Procédé selon la revendication 4, comprenant en outre :
l'inondation du réseau au cours de l'initialisation par les noeuds d'entrée (I1) dudit réseau avec un message TREE (TREE(I1)), et à la réception du message TREE, un routeur (C1 à C4) qui a reçu ledit message TREE (TREE (I1)) propage le message sur chaque interface de sortie à l'exception de celle dans laquelle le message a été reçu, dans lequel chaque message (TREE(I1)) porte l'adresse IP locale, renseignée dans la liste de chemins de distribution, de l'interface de sortie utilisée pour la propagation, ledit procédé comprenant en outre ;
après la réception du message TREE (TREE(I1)), un noeud de sortie (E1, E2, E3) dudit réseau compose un message RESPONSE (RESPONSEE(OK)) correspondant au message TREE (TREE(I1)) reçu et l'envoie au routeur d'entrée (I1) qui est la source du message TREE (TREE(I1)) équivalent, ledit message RESPONSE (RESPONSEE(OK)) portant la liste de chemins de distribution du message TREE (TREE(I1)) équivalent et les interfaces de sortie locales.

6. Procédé selon l'une des revendications précédentes, ladite phase d'initialisation comprenant en outre :
la création d'agrégation d'arborescences multidiffusion non ramifiées (G0 à G9), ladite création comprenant:
après l'attribution d'un canal de multidiffusion à un chemin de distribution, l'envoi d'un message TREE (TREE(I1)) le long du chemin de distribution, dans lequel chaque noeud de coeur (C1 à C4) ajoute dans la base d'informations de routage de multidiffusion (MRIB) l'adresse IP du noeud précédent et propage le message (TREE(I1)) en aval, ladite création comprenant en outre :
après la réception du message TREE (TREE(I1)), la mise à jour par un noeud de sortie (E1, E2, E3) dudit réseau de la MRIB avec l'adresse IP du routeur précédent (C1 à C4), et le déclenchement du protocole de routage de multidiffusion pour créer l'arborescence de multidiffusion.

7. Procédé selon l'une des revendications précédentes, ladite phase d'initialisation comprenant en outre :
le calcul et la création d'arborescences d'agrégation de multidiffusion ramifiées (G10 à G33) qui couvrent plus d'un noeud de sortie (E1, E2, E3) dudit réseau, dans lequel les arborescences ramifiées (G10 à G33) sont calculées en combinant toutes les arborescences non ramifiées (G0 à G9) en tenant compte du routeur d'entrée (I1) dudit réseau et des routeurs de sortie disponibles (E1, E2, E3) dudit réseau,
l'attribution d'un canal de multidiffusion à chacune des arborescences d'agrégation de multidiffusion ramifiées (G10 à G33).

8. Procédé selon la revendication 7, comprenant en outre:
le rejet de toutes les arborescences avec un point d'embranchement à la racine de l'arborescence, et
l'envoi d'un message de signalisation à toutes les arborescences afin de configurer les arborescences de multidiffusion.

9. Procédé selon l'une des revendications précédentes, comprenant en outre :
la commande de la connectivité de session d'une session afin de propager le ou les flux de session d'une session dans les arborescences de distribution créées afin d'éviter un gaspillage de ressources.

10. Appareil pour l'attribution d'une arborescence de multidiffusion dans un réseau, ledit appareil comprenant :
un module pour la création au cours d'une phase d'initialisation d'une pluralité d'arborescences de distribution de multidiffusion possibles (Tree 0, Tree 1, Tree 2), dans lequel ladite pluralité d'arborescences de distribution de multidiffusion possibles (Tree 0, Tree 1, Tree 2) est créée de sorte que pour chaque combinaison ou pour chaque combinaison réaliste de noeuds de sortie (E1, E2, E3) et d'un noeud d'entrée donné (I1, 12) il y a une arborescence de distribution de multidiffusion correspondante qui a été créée et qui peut être utilisée pour commuter entre les arborescences créées afin de s'adapter à un changement dans l'ensemble de noeuds de sortie ;
un module pour la commutation d'arborescences de distribution (Tree 0) en commutant sur une autre arborescence de distribution (Tree 1) sélectionnée parmi les arborescences de distribution (Tree 1, Tree 2) qui ont été créées au cours de ladite phase d'initialisation, dans lequel ladite commutation est effectuée en réponse au fait qu'un noeud de sortie (E2) dudit réseau rejoint ou quitte une session ;
dans lequel
lesdites arborescences de multidiffusion (Tree 0, Tree 1, Tree 2) comprennent des agrégations d'arborescences de multidiffusion dans lesquelles de multiples groupes de multidiffusion partagent une arborescence de distribution,
et **caractérisé en ce que** ledit appareil comprend ;
un module pour la commande de la connectivité de session d'une session (S1) en sélectionnant une agrégation d'arborescence appropriée de sorte que l'agrégation d'arborescence (Tree 0, Tree 1, Tree 2) sélectionnée n'a pas de noeud de feuille vide formé par un noeud de sortie dudit réseau ne participant pas à la session, et en outre de sorte qu'il y a un noeud de feuille dans l'agrégation d'arborescence sélectionnée pour chaque noeud (R1, R2, R3) participant à la session,
dans lequel ledit module pour la création est en outre configuré pour le filtrage de chemins de distribution, dans lequel ledit filtrage comprend la sélection des meilleurs chemins ou le rejet des chemins inefficaces, et
dans lequel ledit filtrage comprend:
le rejet des chemins dans lesquels des routeurs d'entrée dudit réseau sont à l'intérieur des noeuds de transfert d'un chemin, et/ou
le rejet des chemins avec un point d'embranchement dans un routeur d'entrée dudit réseau.

11. Appareil selon la revendication 10, comprenant en outre :
un module pour l'exécution de toutes les étapes d'un procédé selon l'une des revendications 2 à 9.

12. Programme informatique comprenant un code de programme informatique qui, lorsqu'il est exécuté sur un ordinateur, permet au dit ordinateur d'effectuer toutes les étapes d'un procédé selon l'une des revendications 1 à 9.
